# DEMANDE DE BREVET EUROPEEN

(11) **EP 3 266 669 A1**
(43) Date de publication de la demande: **10.01.2018**
(21) Numéro de dépôt: 17179258.3
(22) Date de dépôt: 03.07.2017
(51) Int. Cl.: B61D 17/02

(54) **VÉHICULE DE TRANSPORT FERROVIAIRE ÉQUIPÉ DE RIDEAUX D'AIR**

(30) Priorité: 07.07.2016 FR 1656525
(71) Demandeur: SNCF Mobilités, 93200 Saint-Denis (FR)
(72) Inventeur: ALLAIN, Eliane, 92190 MEUDON (FR); CROUE, Romain, 49000 ANGERS (FR)
(74) Mandataire: Bringer, Mathieu

(57) **Abrégé**

L'invention concerne un véhicule de transport ferroviaire destiné à circuler sur une voie de circulation, caractérisé en ce qu'il comprend au moins un dispositif de canalisation et de guidage d'air, dit rideau (14, 15) d'air, agencé sur un côté dudit véhicule au voisinage d'une zone de turbulence dudit véhicule, de manière à permettre une modification, au cours du déplacement du véhicule sur ladite voie de circulation, des caractéristiques de l'écoulement d'air de ladite zone de turbulence au voisinage de laquelle ce rideau (14, 15) d'air est agencé.

## Description

### 1. Domaine technique de l'invention

L'invention concerne un véhicule ferroviaire, en particulier un véhicule ferroviaire destiné à circuler à grande vitesse sur des voies de circulation dédiées.

### 2. Arrière-plan technologique

Un véhicule de transport ferroviaire, et en particulier un véhicule destiné à circuler à grande vitesse sur une voie de circulation dédiée est sensible aux perturbations aérodynamiques générées par les différents éléments qui le constituent. Ces perturbations aérodynamiques sont particulièrement présentes au voisinage des éléments tournants du véhicule, tels que les roues, et au voisinage des zones de fortes turbulences du véhicule, telles que les cavités présentes le long du véhicule (césures inter caisses, cavités sous la caisse, cavités des toitures, etc.). Ces perturbations aérodynamiques ont pour effet d'une part d'augmenter la consommation d'énergie nécessaire pour faire avancer le véhicule, et d'autre part de générer des nuisances sonores particulièrement problématiques au voisinage des zones d'habitation urbaines et périurbaines.

Aussi, diverses propositions ont déjà été faites pour améliorer le comportement aérodynamique des véhicules ferroviaires de manière à réduire la trainée aérodynamique du véhicule, dans un but d'optimiser la consommation énergétique du train lors de son déplacement et accessoirement de réduire les nuisances sonores au voisinage des voies de passage des trains.

Par exemple, le demandeur a déjà proposé dans la demande FR2958247 d'équiper les trains d'éléments carénés discrets agencés sous le plancher du train pour améliorer le comportement aérodynamique du train. Ainsi, le flux d'air, au cours du déplacement du train, rencontre les éléments carénés discrets placés sous le plancher, ce qui permet d'améliorer le comportement aérodynamique du train. En effet, tout module ou dispositif monté sous le plancher en arrière des éléments carénés est protégé du flux d'air.

Il a également été proposé d'équiper des trains de carénages entourant au moins partiellement les différents éléments susceptibles de générer des turbulences, tels que les bogies. Ces carénages font office de déflecteur en déviant l'air de sa trajectoire normale pour éviter qu'il ne rencontre l'élément susceptible d'impacter les performances aérodynamiques du train.

Ces différentes solutions permettent d'atteindre de bons résultats mais souffrent néanmoins de quelques inconvénients que les inventeurs ont cherché à corriger. En particulier, un carénage d'un bogie génère des complications lors des opérations de maintenance. En effet, la maintenance du bogie nécessite de démonter le carénage pour accéder au bogie, puis de le remonter une fois la maintenance réalisée. Cela allonge la durée d'immobilisation des véhicules ferroviaires, ce qui impacte la rentabilité des opérations d'exploitation de ces véhicules. En outre, un carénage, en recouvrant un équipement, peut conduire à une augmentation de la température de ce dernier, ce qui ne convient pas à tous les équipements, en particulier à ceux dont la température de fonctionnement doit rester dans une gamme de valeurs précises et prédéterminées. En outre, un carénage de bogie rend difficile, sinon impossible, l'utilisation de détecteurs de boite chaude agencée sur la voie ferrée. Enfin, l'ajout d'un carénage sur un véhicule crée un risque de perte de ce carénage au cours du déplacement du véhicule.

Les inventeurs ont donc cherché à proposer une nouvelle solution pour améliorer les performances aérodynamiques des véhicules ferroviaires.

### 3. Objectifs de l'invention

L'invention vise à fournir un véhicule ferroviaire qui pallie au moins certains des inconvénients des véhicules ferroviaires connus.

L'invention vise en particulier à fournir, dans au moins un mode de réalisation, un véhicule ferroviaire dont les performances aérodynamiques sont améliorées par rapport aux véhicules connus.

L'invention vise également à fournir, dans au moins un mode de réalisation, un véhicule ferroviaire qui présente des performances aérodynamiques améliorées par rapport aux véhicules connus sans néanmoins allonger la durée des immobilisations des trains lors des opérations de maintenance.

L'invention vise également à fournir, dans au moins un mode de réalisation, un véhicule ferroviaire qui présente des performances aérodynamiques améliorées par rapport aux véhicules connus sans néanmoins nécessiter l'ajout d'éléments carénés sur le véhicule.

L'invention vise également à fournir, dans au moins un mode de réalisation, un véhicule ferroviaire qui présente des performances aérodynamiques améliorées par rapport aux véhicules connus, sans néanmoins présenter un risque de pertes de pièces au cours du déplacement du véhicule.

L'invention vise également à fournir, dans au moins un mode de réalisation, un véhicule ferroviaire qui présente des performances aérodynamiques améliorées par rapport aux véhicules connus, tout en rendant possible l'utilisation de détecteurs de boite chaude agencée sur la voie ferrée.

### 4. Exposé de l'invention

Pour ce faire, l'invention concerne un véhicule de transport ferroviaire destiné à circuler sur une voie de circulation, caractérisé en ce qu'il comprend au moins un dispositif de canalisation et de guidage d'air, dit rideau d'air, agencé sur un côté dudit véhicule au voisinage d'une zone de turbulence dudit véhicule, de manière à permettre une modification, au cours du déplacement du véhicule sur ladite voie de circulation, des caractéristiques de l'écoulement d'air de ladite zone de turbulence au voisinage de laquelle ce rideau d'air est agencé.

Selon l'invention, les performances aérodynamiques du véhicule sont améliorées par l'agencement de rideaux d'air au voisinage de zones de turbulence. Un rideau d'air permet de canaliser et de guider le flux d'air dans la zone de turbulence au voisinage de laquelle il est agencé de manière à pouvoir modifier les caractéristiques de l'écoulement d'air de cette zone de turbulence. Ainsi, le rideau d'air canalise le flux d'air qui arrive vers la zone de turbulence et le redirige de sorte à limiter son interaction avec la zone de turbulence, ce qui permet d'améliorer les performances aérodynamiques du véhicule. Ce contrôle de l'écoulement d'air est obtenu sans nécessiter un apport d'énergie extérieur. En outre, ces performances améliorées sont obtenues sans nécessiter l'ajout d'éléments carénés entourant les équipements susceptibles de perturber les performances aérodynamiques du véhicule.

Ces rideaux d'air ne recouvrent aucun des éléments clés du véhicule dans la mesure où ils sont agencés sur le côté du véhicule en amont des zones de turbulences. Aussi, un véhicule selon l'invention permet donc d'améliorer les performances aérodynamiques du véhicule sans néanmoins gêner les opérations de maintenance des véhicules. L'ajout de rideaux d'air n'a donc aucune influence sur la durée d'immobilisation des véhicules lors de la maintenance.

En outre, les performances aérodynamiques du véhicule sont améliorées sans néanmoins nécessiter l'ajout d'éléments carénés.

Avantageusement et selon l'invention, au moins un rideau d'air comprend une bouche d'entrée d'air s'étendant dans un plan perpendiculaire à la direction de déplacement du véhicule, une sortie d'évacuation d'air et au moins un canal de guidage d'air s'étendant entre ladite bouche d'entrée d'air et ladite sortie d'évacuation d'air.

Selon cette variante avantageuse, le rideau d'air comprend une bouche d'entrée d'air qui s'étend dans un plan perpendiculaire à la direction du déplacement du véhicule. Cette bouche d'entrée d'air est donc configurée et orientée pour recevoir le maximum d'air lors du déplacement du véhicule. L'air capté en amont par la bouche d'entrée d'air est ensuite véhiculé en aval vers la sortie d'évacuation par au moins un canal de guidage. La sortie d'évacuation est orientée de manière à ce que l'air qui sort du rideau d'air présente une vitesse et une direction permettant de limiter les interactions du flux d'air avec les équipements susceptibles de perturber les performances aérodynamiques du véhicule.

Avantageusement et selon cette variante, au moins un rideau d'air comprend une pluralité de canaux de guidage d'air s'étendant entre ladite bouche d'entrée d'air et ladite sortie d'évacuation d'air.

La présence d'une pluralité de canaux s'étendant entre la bouche d'entrée et la sortie d'évacuation permet un guidage d'une grande quantité d'air. Selon cette variante, le flux de sortie est constitué d'une pluralité de sous-flux, chaque sous-flux étant évacué à partir d'un canal de guidage. Selon une variante de l'invention, chaque sous-flux peut présenter une direction et/ou une vitesse spécifique.

Avantageusement et selon l'invention, au moins un rideau d'air présente une bouche d'entrée d'air dont la section est plus grande que la section de ladite sortie d'évacuation d'air.

Selon cette variante, le rideau d'air permet d'augmenter la vitesse de l'air entre la bouche d'entrée et la sortie d'évacuation de telle sorte que le flux d'air à la sortie du rideau d'air passe rapidement la zone de turbulence, en évitant les équipements susceptibles de réduire les performances aérodynamiques du véhicule.

Avantageusement et selon l'invention, au moins un rideau d'air est configuré pour pouvoir modifier la direction et/ou la vitesse d'écoulement de l'air guidé par ce rideau d'air.

Un tel rideau d'air permet d'orienter le flux de sortie et de l'expulser à une vitesse compatible avec la zone de turbulence qu'il équipe.

Un rideau d'air selon l'invention peut être agencé au voisinage de toutes les zones du véhicule qui présentent des fortes turbulences de nature à impacter les performances aérodynamiques du véhicule.

Par exemple, pour un véhicule comprenant au moins une caisse, au moins un bogie agencé sous la caisse, et des essieux portant ledit bogie et auxquels sont reliés les roues du véhicule, au moins un rideau d'air est avantageusement agencé en amont desdites roues dudit véhicule de manière à pouvoir éjecter l'air, en sortie de rideau d'air, le long des flancs extérieurs des roues pour limiter les effets aérodynamiques desdites roues du véhicule lors du déplacement dudit véhicule sur ladite voie de circulation.

Un tel véhicule équipé d'un rideau d'air en amont des roues permet donc de guider l'air le long des flancs extérieurs des roues, ce qui améliore les performances aérodynamiques du véhicule.

Pour un véhicule comprenant au moins deux caisses séparées l'une de l'autre par une césure inter caisses, au moins un rideau d'air est avantageusement agencé latéralement en amont de ladite césure inter-caisses de manière à pouvoir réduire les turbulences générées par ladite césure inter-caisses au cours d'un déplacement dudit véhicule sur ladite voie de circulation.

Pour un véhicule comprenant au moins une caisse équipée d'une toiture présentant une cavité de toiture, au moins un rideau d'air est avantageusement agencé en amont de ladite cavité de toiture de manière à pouvoir réduire les turbulences générées par la ladite cavité de toiture au cours d'un déplacement dudit véhicule sur ladite voie de circulation.

Pour un véhicule comprenant au moins une caisse présentant au moins une cavité sous caisse, au moins un rideau d'air est avantageusement agencé en amont de ladite cavité sous caisse de manière à pouvoir réduire les turbulences générées par cette cavité au cours d'un déplacement dudit véhicule sur ladite voie de circulation.

Avantageusement et selon l'invention, au moins un rideau d'air est agencé latéralement sur chaque côté du véhicule.

Avantageusement et selon l'invention, au moins un rideau d'air est agencé latéralement à chaque extrémité longitudinale dudit véhicule de manière à permettre une canalisation et un guidage d'air dans chacun des deux sens de circulation dudit véhicule.

Selon cette variante avantageuse, le véhicule présente des performances aérodynamiques améliorées quelque soit son sens de circulation.

Un rideau d'air d'un véhicule selon l'invention peut être directement intégré au véhicule lors de la conception du véhicule ou rapporté sur le véhicule par des moyens de fixation. L'utilisation de rideaux d'air rapportés par des moyens de fixation permet d'équiper des véhicules déjà en circulation et d'en améliorer les performances aérodynamiques.

L'invention concerne également un véhicule ferroviaire caractérisé en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique partielle de face d'un véhicule selon un mode de réalisation de l'invention,
- la figure 2 est une vue schématique partielle en perspective de dessous d'un véhicule selon un mode de réalisation de l'invention,
- la figure 3 est une vue schématique partielle de côté d'un véhicule selon un mode de réalisation de l'invention,
- la figure 4 est une vue schématique partielle de côté d'un rideau d'air d'un véhicule selon un mode de réalisation de l'invention.

### 6. Description détaillée d'un mode de réalisation de l'invention

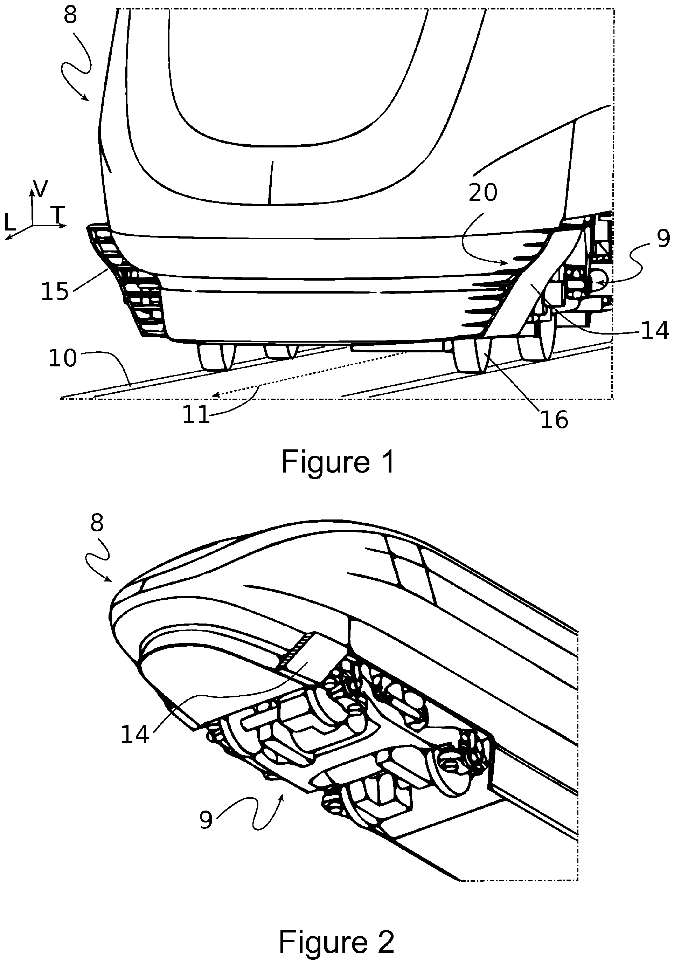

Sur les figures, les échelles et les proportions ne sont pas strictement respectées et ce, à des fins d'illustration et de clarté. Dans toute la description détaillée qui suit en référence aux figures, sauf indication contraire, chaque élément du véhicule est décrit tel qu'il est agencé lorsque le véhicule est en circulation sur une voie de circulation horizontale s'étendant le long d'une direction longitudinale. Cet agencement est notamment représenté sur la figure 1.

En outre, les éléments identiques, similaires ou analogues sont désignés par les mêmes références dans toutes les figures. Enfin, les termes longitudinal, transversal et vertical sont utilisés à titre non limitatif en référence au trièdre L, T, V tel que représenté sur la figure 1. La direction longitudinale correspond à la direction principale de déplacement du véhicule sur une voie de circulation dédiée. Les termes amont et aval sont utilisés à titre non limitatif en référence à cette direction de déplacement du train.

Un véhicule de transport ferroviaire comprend de manière connue au moins une motrice 8 et une pluralité de voitures reliées et articulées les unes aux autres et tractées par la motrice 8. Sur la figue 1, seule la motrice 8 est représentée à des fins de clarté.

En fonctionnement, le véhicule de transport ferroviaire se déplace sur des rails 10 le long d'une direction 11 longitudinale.

La motrice 8 ainsi que les différentes voitures reposent classiquement sur des bogies, qui sont des chariots supportant la caisse. La motrice 8 comprend deux bogies 12 moteurs situés à chaque extrémité longitudinale de la motrice 8 alors que les voitures tractées comprennent des bogies porteurs (c'est à dire que les bogies ne fournissent pas d'énergie).

Un véhicule de transport ferroviaire comprend un certain nombre de zones 9 de turbulence, notamment les zones des bogies moteurs, les césures inter-caisses, les différentes cavités présentes sous les voitures ou sur les toitures de voitures et de manière générale, toute les aspérités et cavités amenées à rentrer en contact avec le flux d'air au cours du déplacement du véhicule sur la voie de circulation.

Dans toute la suite, l'invention est décrite en lien avec la zone 9 de turbulence formée par la zone du bogie 12 moteur étant entendu que les enseignements techniques s'appliquent sans difficulté à toutes les autres zones de turbulences présentes sur un véhicule de transport ferroviaire telle que notamment les césures inter-caisses, les cavités sous caisse et les cavités de toiture.

Selon le mode de réalisation de la figure 1, le véhicule de transport ferroviaire comprend deux dispositifs de canalisation et de guidage d'air, dit rideaux 14, 15 d'air, agencé respectivement sur chacun des côtés de la motrice en amont du bogie 12 moteur. Cette zone du bogie 12 moteur est une zone 9 de turbulence qui impacte les performances aérodynamiques du véhicule au cours de son déplacement.

Ces rideaux d'air 14, 15 sont configurés pour pouvoir modifier, au cours du déplacement du véhicule sur la voie de circulation, les caractéristiques de l'écoulement d'air de cette zone 9 de turbulence formée par le bogie 12 moteur.

En particulier, les rideaux d'air 14, 15 sont agencés en amont des roues 16 du véhicule de manière à pouvoir éjecter l'air, en sortie des rideaux 14,15 d'air, le long des flancs extérieurs des roues 16 pour limiter les effets aérodynamiques des roues 16 du véhicule lors du déplacement du véhicule sur la voie de circulation.

L'architecture d'un rideau d'air selon un mode de réalisation de l'invention va maintenant être décrite en lien avec les figures 1 à 4.

Le rideau d'air 15 comprend une bouche 20 d'entrée d'air qui s'étend dans un plan sensiblement perpendiculaire à la direction 11 de déplacement du véhicule.

Le rideau d'air 15 comprend également une sortie 21 d'évacuation d'air destinée à éjecter l'air suivant une direction et/ou une vitesse différente(s) de celle(s) du flux d'air d'entrée.

Le rideau d'air comprend en outre une pluralité de canaux 22 de guidage d'air, chaque canal 22 s'étendant entre la bouche 20 d'entrée d'air et la sortie 21 d'évacuation d'air. Selon le mode de réalisation des figures, chaque canal 22 s'étend intégralement entre la bouche 20 d'entrée et la sortie 21 d'évacuation d'air. Selon d'autres modes de réalisation, les canaux 22 peuvent s'étendre uniquement partiellement entre la bouche d'entrée et la sortie d'évacuation.

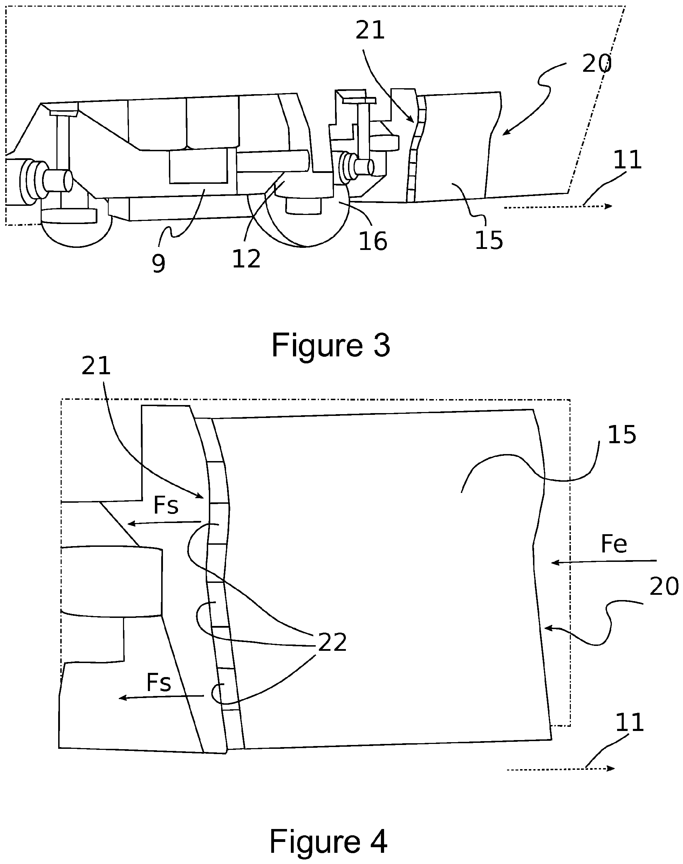

Lorsque le véhicule circule sur la voie de circulation, l'air en amont du rideau 15 d'air est capté par le rideau d'air au niveau de la bouche 20 d'entrée. Le flux d'air capté par le rideau 15 d'air est schématisé par la flèche *Fe* sur la figure 4. L'air circule ensuite dans les différents canaux 22 de canalisation et de guidage jusqu'à être expulsé par la sortie 21 d'évacuation d'air. Le flux d'air en sortie de rideau 15 d'air est constitué d'une pluralité de sous-flux schématisés par les flèches *Fs* sur la figure 4. Chaque canal 12 expulse un sous-flux *Fs.* La sortie 21 d'évacuation d'air est orientée de telle sorte que le flux d'air global éjecté suive une trajectoire permettant d'éviter un contact direct avec les éléments générant les turbulences. Dans le cas du bogie 12 moteur, l'air est expulsé de telle sorte qu'il longe les flancs extérieurs des roues 16 du véhicule. Selon un mode de réalisation, chaque canal peut présenter une orientation propre de sorte que le sous-flux *Fs* suive une trajectoire propre, éventuellement distincte des autres trajectoires des autres sous-flux.

Selon le mode de réalisation des figures, chaque canal 22 présente, du côté de la bouche d'entrée, une hauteur *he* selon la direction verticale et une largeur *le* selon la direction transversale de telle sorte que la section d'entrée de chaque canal *Se* est égal à *he* x *le.* En outre, chaque canal présente du côté de la sortie d'évacuation une hauteur *hs* et une largeur *ls* de telle sorte que la section de sortie de chaque canal *Ss* est égal à *hs* x *ls.* En outre, chaque canal s'étend sur une longueur *L* le long de la direction longitudinale entre la bouche d'entrée et la sortie d'évacuation.

Selon un mode de réalisation, chaque canal est conçu de telle sorte que la section d'entrée *Se* soit plus grande que la section de sortie *Ss,* ce qui permet aux canaux d'accélérer le flux d'air et de l'éjecter du rideau d'air avec une vitesse plus grande que celle qu'il avait en entrant dans le rideau d'air.

Un véhicule selon l'invention peut comprendre une pluralité de rideaux d'air, chaque rideau d'air étant configuré pour améliorer l'écoulement d'air de la zone en amont de laquelle il est agencé. Ainsi, les différents rideaux d'air du véhicule ne sont pas nécessairement identiques. Le nombre de canaux du rideau, leur orientation et leurs dimensions sont spécifiques à chaque utilisation et à chaque zone de turbulence visée.

A titre d'exemple non limitatif, le rideau 15 d'air peut par exemple présenter les valeurs suivantes :
- 8 canaux similaires,
- *he* = 7 cm,
- *le* = 12 cm,
- *hs* = 7 cm,
- *ls* = 15 cm,
- L = 75 cm.

Bien évidemment, ces valeurs ne sont données que pour illustrer un mode de réalisation de l'invention parmi d'autres. En fonction du type de véhicule considéré, de la vitesse de croisière de ce véhicule et des zones de turbulences visées par le rideau d'air, d'autres valeurs peuvent être utilisées pour répondre au but visé de réduction des perturbations aérodynamiques.

Le rideau d'air peut être fait en tout type de matériau compatible avec les contraintes mécaniques de son utilisation. Par exemple, le rideau d'air peut être fait en acier, en matériau composite, etc.

Selon un mode de réalisation, le rideau d'air est directement intégré au véhicule lors de la conception du véhicule pour limiter l'impact sur le gabarit du véhicule.

Selon d'autres modes de réalisation, et notamment pour pouvoir mettre à niveau les véhicules déjà en service, le rideau d'air peut être rapporté sur le véhicule ferroviaire par des moyens de fixation, du type vis-écrou ou tout moyen équivalent.

En outre, selon un autre mode de réalisation non représenté sur les figures, le rideau d'air est symétrique de telle sorte qu'il est efficace dans les deux sens de circulation du véhicule. La bouche d'entrée d'air fait alors office de sortie d'évacuation lorsque le véhicule circule dans le sens inverse de circulation.

Un rideau d'air peut être utilisé en lien avec chaque zone de turbulence du véhicule.

Comme représenté sur les figures, un rideau d'air peut être utilisé en amont d'un bogie moteur pour pouvoir éjecter l'air, en sortie de rideau d'air, le long des flancs extérieurs des roues pour limiter les effets aérodynamiques des roues du véhicule lors du déplacement du véhicule sur la voie de circulation.

D'une manière générale, un rideau d'air peut être agencé en amont de toute zone de turbulence comprenant des éléments tournants.

Un rideau d'air peut également être agencé en amont d'une césure inter caisses, de manière à pouvoir réduire les turbulences générées par cette césure inter-caisses au cours d'un déplacement du véhicule sur la voie de circulation.

Un rideau d'air peut également être agencé en amont d'une cavité de toiture de caisse de manière à pouvoir réduire les turbulences générées par cette cavité de toiture au cours d'un déplacement du véhicule sur la voie de circulation.

Un rideau d'air peut également être agencé en amont d'une cavité sous caisse de manière à pouvoir réduire les turbulences générées par cette cavité au cours d'un déplacement du véhicule sur la voie de circulation.

L'invention est particulièrement destiné aux véhicules circulant à grande vitesse sur une voie de circulation dédiée, tel qu'un train TGV® mais elle peut bien sur également s'appliquer à tous types de véhicules ferroviaires confrontés à des problématiques de turbulence et de performances aérodynamiques.

## Revendications

1. Véhicule de transport ferroviaire destiné à circuler sur une voie de circulation, **caractérisé en ce qu'**il comprend au moins un dispositif de canalisation et de guidage d'air, dit rideau (14, 15) d'air, agencé sur un côté dudit véhicule au voisinage d'une zone (9) de turbulence dudit véhicule, de manière à permettre une modification, au cours du déplacement du véhicule sur ladite voie de circulation, des caractéristiques de l'écoulement d'air de ladite zone (9) de turbulence au voisinage de laquelle ce rideau (14, 15) d'air est agencé.

2. Véhicule selon la revendication 1, **caractérisé en ce qu'**au moins un rideau (14, 15) d'air comprend une bouche (20) d'entrée d'air s'étendant dans un plan perpendiculaire à la direction (11) de déplacement dudit véhicule, une sortie (21) d'évacuation d'air et au moins un canal (22) de guidage d'air s'étendant entre ladite bouche (20) d'entrée d'air et ladite sortie (21) d'évacuation d'air.

3. Véhicule selon la revendication 2, **caractérisé en ce qu'**au moins un rideau (14, 15) d'air comprend une pluralité de canaux (22) de guidage d'air s'étendant entre ladite bouche (20) d'entrée d'air et ladite sortie (21) d'évacuation d'air.

4. Véhicule selon l'une des revendications 2 ou 3, **caractérisé en ce qu'**au moins un rideau (14, 15) d'air présente une bouche (20) d'entrée d'air dont la section est plus grande que la section de ladite sortie (21) d'évacuation d'air.

5. Véhicule selon l'une des revendications 1 à 4, **caractérisé en ce qu'**au moins un rideau (14, 15) d'air est configuré pour pouvoir modifier la direction et/ou la vitesse d'écoulement de l'air guidé par ce rideau d'air.

6. Véhicule selon l'une des revendications 1 à 5, comprenant en outre au moins une caisse, au moins un bogie (12) agencé sous la caisse, et des essieux portant ledit bogie (12) et auxquels sont reliés les roues (16) du véhicule, **caractérisé en ce qu'**au moins un rideau (14, 15) d'air est agencé en amont desdites roues (16) dudit véhicule de manière à pouvoir éjecter l'air, en sortie de rideau d'air, le long des flancs extérieurs des roues (16) pour limiter les effets aérodynamiques desdites roues (16) du véhicule lors du déplacement dudit véhicule sur ladite voie de circulation.

7. Véhicule selon l'une des revendications 1 à 6, comprenant en outre au moins deux caisses séparées l'une de l'autre par une césure inter caisses, **caractérisé en ce qu'**au moins un rideau d'air est agencé latéralement en amont de ladite césure inter-caisses de manière à pouvoir réduire les turbulences générées par ladite césure inter-caisses au cours d'un déplacement dudit véhicule sur ladite voie de circulation.

8. Véhicule selon l'une des revendications 1 à 7, comprenant en outre au moins une caisse équipée d'une toiture présentant une cavité de toiture, **caractérisé en ce qu'**au moins un rideau d'air est agencé en amont de ladite cavité de toiture de manière à pouvoir réduire les turbulences générées par la ladite cavité de toiture au cours d'un déplacement dudit véhicule sur ladite voie de circulation.

9. Véhicule selon l'une des revendications 1 à 8, comprenant en outre au moins une caisse présentant au moins une cavité sous caisse, **caractérisé en ce qu'**au moins un rideau d'air est agencé en amont de ladite cavité sous caisse de manière à pouvoir réduire les turbulences générées par cette cavité au cours d'un déplacement dudit véhicule sur ladite voie de circulation.

10. Véhicule selon l'une des revendications 1 à 9, **caractérisé en ce qu'**il comprend au moins un rideau (14, 15) d'air agencé latéralement sur chaque côté du véhicule.

11. Véhicule selon l'une des revendications 1 à 10, **caractérisé en ce qu'**il comprend au moins un rideau d'air agencé latéralement à chaque extrémité longitudinale dudit véhicule de manière à permettre une canalisation et un guidage d'air dans chacun des deux sens de circulation dudit véhicule.

12. Véhicule selon l'une des revendications 1 à 11, **caractérisé en ce qu'**au moins un rideau d'air est rapporté sur ledit véhicule ferroviaire par des moyens de fixation.
